(19) Europäisches Patentamt
European Patent Office
Office européen des brevets

(11) **EP 4 376 133 A1**

(12) **EUROPEAN PATENT APPLICATION**

(43) Date of publication:
**29.05.2024 Bulletin 2024/22**

(21) Application number: **23211124.5**

(22) Date of filing: **21.11.2023**

(51) International Patent Classification (IPC):
***H01M 8/1023*** *(2016.01)* ***H01M 8/1004*** *(2016.01)*
***C25B 13/08*** *(2006.01)*

(52) Cooperative Patent Classification (CPC):
**H01M 8/1023; C25B 13/08; H01M 8/1004;**
H01M 2300/0082

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 KR 20220158862**

(71) Applicant: **Korea Institute of Science and Technology**
**Seoul 02792 (KR)**

(72) Inventors:
- **Lee, Albert**
  **02792 Seoul (KR)**
- **Hwang, Seung Sang**
  **02792 Seoul (KR)**
- **Kim, Seon Joon**
  **02792 Seoul (KR)**
- **Oh, Taegon**
  **02792 Seoul (KR)**
- **Jung, Ji Yoon**
  **02792 Seoul (KR)**
- **Park, Young Sang**
  **02792 Seoul (KR)**
- **Yoo, Dong-Yeop**
  **02792 Seoul (KR)**
- **Ku, Jin Suk**
  **02792 Seoul (KR)**
- **Kim, Junggyu**
  **02792 Seoul (KR)**

(74) Representative: **advotec.**
**Patent- und Rechtsanwaltspartnerschaft**
**Tappe mbB**
**Widenmayerstraße 4**
**80538 München (DE)**

(54) **IONOMER COMPRISING COMPOUND DERIVED FROM N,N-DIALLYLAMINE AND MANUFACTURING METHOD THEREOF**

(57) The specification relates an ionomer comprising a compound derived from N,N-diallylamine and a method for preparing the same. The ionomer according to one embodiment of the disclosure has an effect of providing excellent battery performance by controlling the ion exchange capability in a wide range while having excellent alkaline durability.

FIG. 1

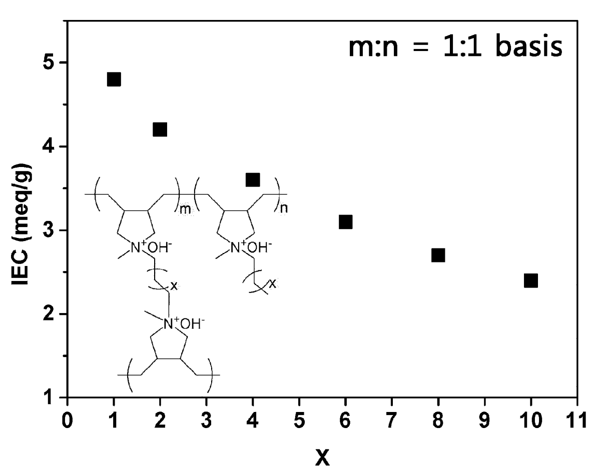


EP 4 376 133 A1

## Description

BACKGROUND OF THE INVENTION

Field of the Invention

This invention was made with the support of the Ministry of Science and ICT under Project No. 1711156125, which was conducted under the research project entitled "Development of reactive nano-composite filters for hazardous wastes from semiconductor/electronic industry" within the project named "Nano Material Technology Development" under the management of the National Research Foundation of Korea, from January 1, 2022 to December 31, 2022.

This invention was made with the support of the Ministry of Science and ICT under Project No. 1711175402, which was conducted under the research project entitled "Solutions to Electromagnetic Interference in Future-mobility" within the project named "Support for research and operation expenses of the National Research Council of Science and Technology" under the management of the National Research Council of Science and Technology, from May 1, 2022 to December 31, 2022.

The present specification discloses an ionomer comprising compound derived from N,N-diallylamine and a method for preparing the same.

Description of the Related Art

Renewable energy is in the limelight due to depletion of fossil fuels and climate change, and electrolysis technology for producing hydrogen using electricity from renewable energy is being used. Hydrogen is a very useful raw material and can be used as a fuel for many types of fuel cells. The water electrolysis device and fuel cell have a structure in which an anode and cathode are coated on both sides of an electrolyte membrane composed of a polymer material, which is called a membrane electrode assembly (MEA). The separator or ionomer included in the membrane electrode assembly requires excellent alkaline durability in order to operate in an alkaline environment. Currently used materials contain structures that are vulnerable to alkaline, so they are difficult to be applied and have a problem of insufficient durability. In particular, a structure including an aryl-ether structure is attacked by hydroxy group ions and is vulnerable to alkaline conditions. Therefore, it is required to develop a separator or ionomer that does not contain an aryl-ether structure. In addition, a lot of development has been done on separators and ionomers based on polystyrene. However, in the case of ionomers containing a phenyl group, phenyl is adsorbed on the electrode and oxidized, thereby reducing battery performance. Therefore, it is important to develop an ionomer that does not contain a phenyl group.

In this regard, Korean Patent Registration No. 10-0908780 discloses a membrane electrode assembly for water electrolysis and a method for manufacturing the same, which includes spray-coating a mixture of iridium (Ir) oxide and a proton conductive ionomer directly on one side of a solid polymer electrolyte membrane. However, it is still difficult to control the ion exchange capacity, which is directly related to the ionic conductivity, in a wide range.

SUMMARY OF THE INVENTION

An object according to one aspect of the present disclosure is to provide an ionomer that has excellent alkaline durability, controls ion exchange capacity in a wide range, and provides excellent battery performance, and a method for preparing the same.

In one aspect of the disclosure, an ionomer comprising a compound represented by Formula 1 below is provided:

[Formula 1]

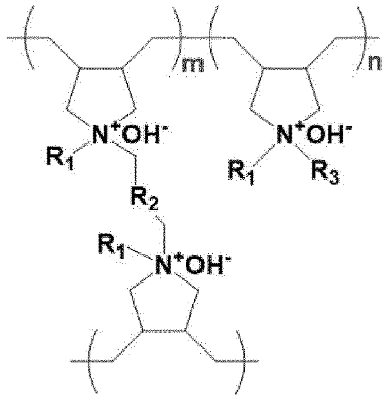

In another aspect, the disclosure provides a membrane electrode assembly comprising a cathode electrode; an anode electrode positioned opposite to the cathode electrode; and an electrolyte membrane positioned between the cathode electrode and the anode electrode, wherein at least one of the cathode electrode, the anode electrode, and the electrolyte membrane comprises the ionomer.

In another aspect, the disclosure provides a water electrolysis device comprising the membrane electrode assembly.

In another aspect, the disclosure provides a fuel cell comprising the membrane electrode assembly.

In another aspect, the disclosure provides a method for preparing the ionomer, the method comprising the steps of modifying N,N-diallylamine to obtain N,N-diallylalkylamine; polymerizing the N,N-diallylalkylamine to obtain 3,4-dimethyl-N-alkyl-pyrrole monomer represented by Formula 2 below; and performing quaternization and crosslinking of the 3,4-dimethyl-N-alkyl-pyrrole monomer to obtain a compound represented by Formula 1.

[Formula 2]

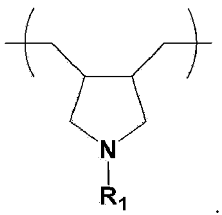

The ionomer according to one embodiment of the disclosure has an effect of providing excellent battery performance by controlling the ion exchange capability in a wide range while having excellent alkaline durability.

BRIEF DESCRIPTION OF THE DRAWINGS

FIG. 1 is a graph showing results of evaluating an ion exchange capacity of ionomers according to one embodiment of the disclosure.

FIG. 2 is a graph showing results of evaluating an ion exchange capacity of ionomers according to one embodiment of the disclosure.

DETAILED DESCRIPTION OF THE INVENTION

Hereinafter, preferred embodiments of the present disclosure will be described in detail with reference to the accompanying drawings.

The Examples of the present disclosure disclosed herein are exemplified for the purpose of describing the Examples of the present disclosure only, and the Examples of the present disclosure may be carried out in various forms and should not be construed to limit the Examples described herein. Since the present disclosure may have various

changes and different forms, it should be understood that the Examples are not intended to limit the present disclosure to specific disclosure forms and they include all the changes, equivalents and replacements included in the spirit and technical scope of the present disclosure.

In the present specification, when one part is said to "comprise" an element, unless specifically mentioned otherwise, instead of excluding any other element, this may signify that the one part may further include other elements.

Throughout the specification, the same reference numerals designate the same components. When a component such as a layer, a film, a region, or a plate is mentioned to be placed "on" or "above" another component, it will be understood that it may be directly on another component or that another component may be interposed therebetween throughout the specification. Throughout the specification, the terms "first", "second", etc., may be used to describe various components, and should not be limited by these terms. These terms are used only to distinguish one component from another, not for purposes of limitation.

## Ionomer

In one aspect of the disclosure, an ionomer comprising a compound represented by Formula 1 below is provided.

[Formula 1]

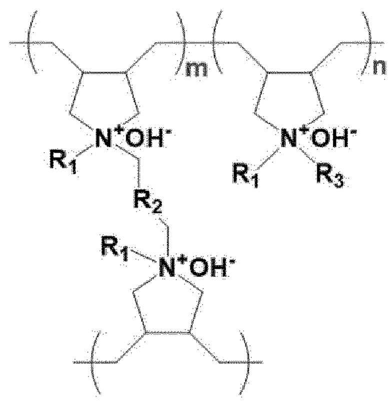

In Formula 1,

the m is an integer from 0 to 100,
the n is an integer equal to 100-m,
the $R_1$ and the $R_3$ are each independently $-(CH_2)_xCH_3$, $-(CH_2)_x(CF_2)_yCF_3$, or

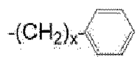

(where x and y are each independently an integer greater than or equal to 0),
the $R_2$ is $-(CH_2)_x$, $-(CF_2)_x$,

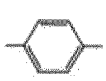 or 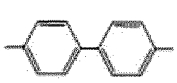

(where x is an integer greater than or equal to 0).

The present inventors found problems in that when containing an aryl-ether structure, the isomer is attacked by hydroxy group ions and is vulnerable to alkaline conditions, and when containing a phenyl group, phenyl is adsorbed and oxidized on the electrode, thereby reducing battery performance, and thus, invented an ionomer not containing the aryl-ether structure or the phenyl group. The compound according to the disclosure has high alkaline stability because most of the beta hydrogen is present inside the compound.

In addition, the present inventors can control a degree of hydrophilicity by selecting and applying hydrophilic functional groups and hydrophobicity in $R_1$, $R_2$ and $R_3$. Through the modification of the monomer according to the disclosure, the molecular weight of the repeating unit of the compound can be controlled, thereby controlling the ion

exchange capacity (IEC) in a wide range.

In one embodiment, the molecular weight of the repeating unit of the compound is 150 to 667. More specifically, the molecular weight of the repeating unit of the compound may be 150 or more, 200 or more, 250 or more, 300 or more, 350 or more, 400 or more, 437 or more, 450 or more; 667 or less, 650 or less, 600 or less, 550 or less, 500 or less, 450 or less, but is not limited thereto. By controlling the molecular weight of the repeating unit of the compound, the ion exchange capacity (IEC) can be controlled in a wide range.

In one embodiment, the compound has a fluorine atom content of 0 to 67 F%. More specifically, the fluorine atom content of the compound may be 0 F% or more, 5 F% or more, 10 F% or more, 15 F% or more, 20 F% or more, 25 F% or more, 30 F% or more, 35 F% or more, 40 F% or more, 45 F% or more; 67 F% or less, 65 F% or less, 60 F% or less, 55 F% or less, 50 F% or less, 45 F% or less, but is not limited thereto. By controlling the fluorine atom content, the ion exchange capacity (IEC) can be controlled in a wide range and the degree of hydrophilicity can be controlled at the same time.

In one embodiment, the ratio of m and n (m/n) is 0 to 1. By controlling the ratio of m and n (m/n), it is possible to obtain an ionomer that has desired crosslinking density and ion exchange capacity (IEC), is insoluble in water and has mechanical stability.

In one embodiment, the x is from 0 to 20. By controlling the x for $R_1$, $R_2$, and $R_3$ in Formula 1, the ion exchange capacity (IEC) can be controlled in a wide range.

In the disclosure, only a single polymer compound may be used as the ionomer.

## Membrane electrode assembly, water electrolysis device, and fuel cell

In another aspect, the disclosure provides a membrane electrode assembly (MEA) comprising a cathode electrode; an anode electrode positioned opposite to the cathode electrode; and an electrolyte membrane positioned between the cathode electrode and the anode electrode, wherein at least one of the cathode electrode, the anode electrode, and the electrolyte membrane comprises the ionomer.

In another aspect, the disclosure provides a water electrolysis device comprising the membrane electrode assembly. The hydrogen energy produced by a water electrolysis device has advantages of high efficiency, abundant fuel (water), and no emission of pollutants such as nitrogen oxides (NOx) or sulfur oxides (SOx). Hydrogen can be produced by electrolysis of pure water or electrolysis of aqueous alkali solution.

In another aspect, the disclosure provides a fuel cell comprising the membrane electrode assembly. The fuel cell may be a polymer electrolyte membrane fuel cell (PEMFC). The polymer electrolyte membrane fuel cell is a device that converts chemical energy into electrical energy, and can utilize energy with higher efficiency than conventional internal combustion engines, and is a clean energy source that does not emit environmental pollutants such as carbon dioxide, nitrous oxide, and sulfur oxide during the energy conversion process.

## Preparation method of ionomer

In another aspect, the disclosure provides a method for preparing the ionomer comprising the steps of modifying N,N-diallylamine to obtain N,N-diallylalkylamine; polymerizing the N,N-diallylalkylamine to obtain 3,4-dimethyl-N-alkyl-pyrrole monomer represented by Formula 2 below; and performing quaternization and crosslinking of the 3,4-dimethyl-N-alkyl-pyrrole monomer to obtain a compound represented by Formula 1.

[Formula 1]

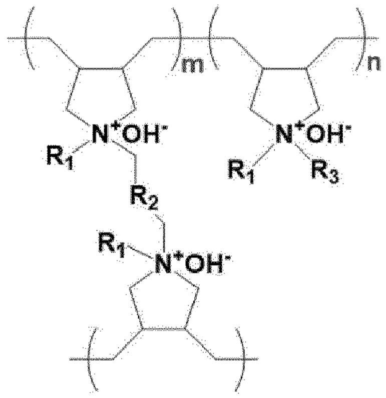

In Formula 1,

the m is an integer from 0 to 100,
the n is an integer equal to 100-m,
the $R_1$ and the $R_3$ are each independently $-(CH_2)_xCH_3$, $-(CH_2)_x(CF_2)_yCF_3$, or

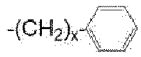

(where x and y are each independently an integer greater than or equal to 0),
the $R_2$ is $-(CH_2)_x$, $-(CF_2)_x$,

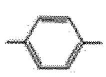 or 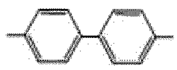

(where x is an integer greater than or equal to 0);

[Formula 2]

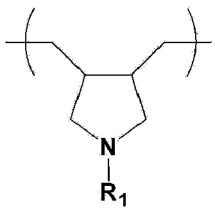

In Formula 2,
the $R_1$ is $-(CH_2)_xCH_3$, $-(CH_2)_x(CF_2)_yCF_3$ or

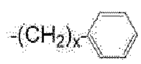

(where x and y are each independently an integer greater than or equal to 0).

In the disclosure, the ion exchange capacity (IEC) can be controlled in a wide range by using a synthesis method using N,N-diallylamine.

In one embodiment, the step of obtaining the N, N- diallylalkylamine is performed according to Scheme 1 below.

[Scheme 1]

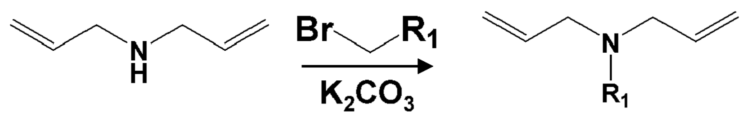


When introducing an alkyl group into N,N-diallylamine, an alkyl halide reagent should be used, and one substituted with chloro or iodide may be used instead of bromo.

In one embodiment, the step of obtaining the 3,4-dimethyl-N-alkyl-pyrrole monomer is performed according to Scheme 2 below.

[Scheme 2]

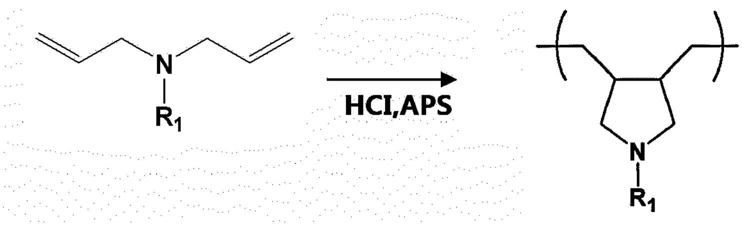


The polymerization of N,N-diallylamine used in the disclosure can be easily scaled up by using inexpensive hydrochloric acid as a catalyst.

In one embodiment, a polymerization initiator may be used in the step of obtaining the 3,4-dimethyl-N-alkyl-pyrrole monomer. The polymerization initiator is one or more selected from the group consisting of potassium persulfate (KPS), ammonium persulfate (APS), sodium persulfate (SPS), benzoyl peroxide (BPO), 2,2'-azobis(2-amidinopropane)dihydrochloride (AAPH), 2,2'-azobis(2-methylpropionitrile) (AIBN), 2,2'-azobis(2-methylbutyronitrile) (AMBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovaleric acid) (ACVA), 1,1'-azobis(1-acetoxy-1-phenylethane), 2,2'-azobis(2-methylbutylamide), 2,2'-azobis(4-methoxy-2,4-dimethylvaleronitrile), 2,2'-azobis(2-methylamidinopropane)dihydrochloride, 2,2'-azobis[2-(2-imidazolin-2-yl)propane], 2,2'-azobis[2-methyl-N-(2-hydroxyethyl)propionamide], 2,2'-azobis(2,4,4-trimethylpentane), 2-cyano-2-propylazoformamide, 2,2'-azobis(N-butyl-2-methylpropionamide), and 2,2'-azobis(N-cyclohexyl-2-methylpropionamide).

In one embodiment, the step of obtaining the compound represented by Formula 1 is performed according to Scheme 3 below.

[Scheme 3]

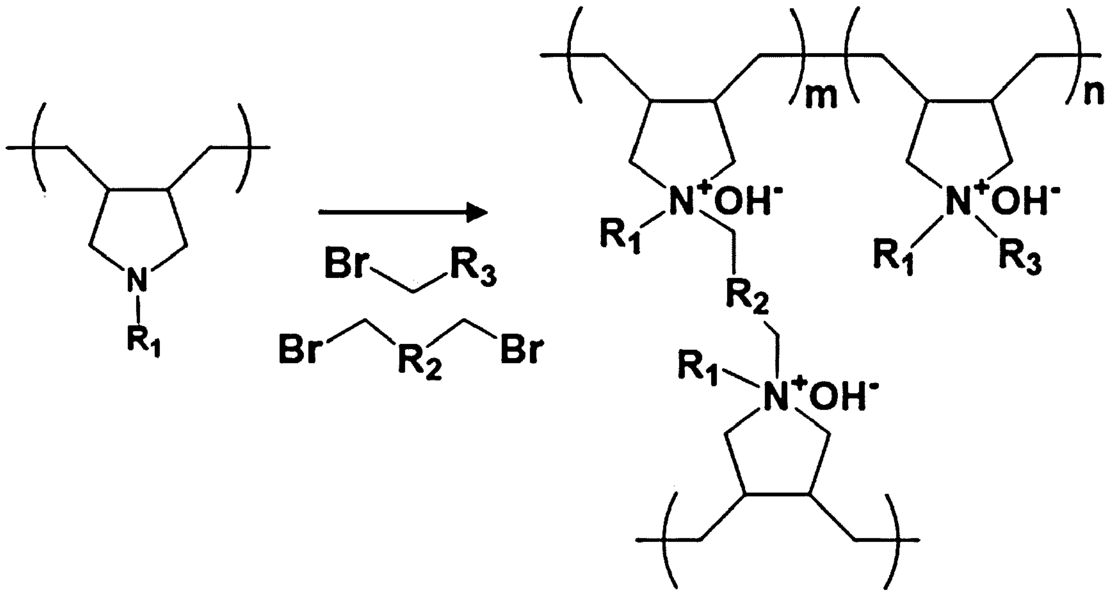

Hereinafter, the disclosure will be described in detail with reference to preferred examples so that those skilled in the art can easily practice the disclosure. However, the disclosure may be embodied in many different forms, and is not limited to the examples described herein.

**{Example}**

**<Preparation Example 1> Preparation of compound according to the disclosure**

The modification was performed by mixing 7.66 g of 2-bromohexane and 6.45 g of potassium carbonate ($K_2CO_3$) as bromoalkyl in 5.00 g of N,N-diallylamine (Sigma Aldrich) to obtain N,N-diallylalkylamine. Subsequently, the polymerization was performed by mixing 3 g of N,N-diallylalkylamine with 0.65 g of 37 wt% hydrochloric acid and 0.45 g of ammonium persulfate (APS) to obtain 3,4-dimethyl-N-alkyl-pyrrole monomer. Then, by mixing bromoalkane and dibromoalkane with the 3,4-dimethyl-N-alkyl-pyrrole monomer, quaternization reaction and cross-linking were performed to obtain the compound represented by Formula 1.

**<Experimental Example 1> Evaluation of ion exchange capability according to functional groups**

**1. Evaluation method**

An electrolyte membrane was prepared using the compound prepared in Preparation Example 1. For the electrolyte membrane, the ion exchange capability was evaluated according to Equation 1 below by acid-base titration using an aqueous solution of 1N NaOH and an aqueous solution of 1 N HCl.

[Equation 1]

$$IEC=\{(V_{HCl} X N_{HCl})-(V_{NaOH} X N_{NaOH})\}/\text{Weight of sample(g)}$$

IEC: Ion exchange capability(meq/g)
$V_{HCl}$: Volume of HCl(ml), $V_{NaOH}$: Volume of NaOH(ml)
$N_{HCl}$: Concentration of HCl(N), $N_{NaOH}$: Concentration of NaOH(N)

For comparison, the compounds prepared by setting the x for $R_1$, $R_2$ and $R_3$ to 1, 2, 4, 6, 8 and 10 respectively in Formula 1 were prepared. The results were shown in FIG. 1. FIG. 1 is a graph showing the results of evaluating the ion exchange capability of ionomers according to one embodiment of the disclosure.

### 2. Evaluation result

From FIG. 1, it can be confirmed that the ion exchange capability is enhanced as the molecular weight of the repeating unit of the compound decreases. Accordingly, it can be confirmed that the ion exchange capacity (IEC) can be controlled in a wide range by controlling the molecular weight of the repeating unit of the compound.

## <Experimental Example 2> Evaluation of ion exchange capability according to fluorine atom content

### 1. Evaluation method

An electrolyte membrane was prepared using the compound prepared in Preparation Example 1. For the electrolyte membrane, the ion exchange capability was evaluated in the same manner as in Experimental Example 1. Meanwhile, the fluorine atom content (F%) of the compound prepared in Preparation Example 1 was measured by neutron activation. The results were shown in FIG. 2 and Table 1. FIG. 2 is a graph showing the evaluation results of the ion exchange capability of the ionomer according to one embodiment of the disclosure.

(In the compound $DBr_{(i+2)}(CF_2)_j(CF_3)$-mn in Table 1 below, DBr represents a repeating unit derived from a dibromoalkane reagent, and (i+2) represents the number of alkyl groups derived from the dibromoalkane reagent, $(CF_2)_j$ represents the n portion that is not crosslinked, and j represents the number of $(CF_2)$ in the chain. In addition, -mn represents m and n in Formula 1, respectively. $(CF_2)_5CF_3$ and $(CF_2)_7CF_3$ indicate that m is 0 and only n portion exists).

[Table 1]

| **Compound** | Fluorine atom content **(F%)** | **Ion exchange capability (mmol/g)** |
|---|---|---|
| $DBr_4(CF_2)_5CF_3$-11 | 18.14 | 2.39 |
| $DBr_8(CF_2)_5CF_3$-11 | 17.00 | 2.24 |
| $DBr_{12}(CF_2)_5CF_3$-11 | 16.00 | 2.10 |
| $DBr_4(CF_2)_7CF_3$-11 | 20.26 | 2.13 |
| $DBr_8(CF_2)_7CF_3$-11 | 19.11 | 2.01 |
| $DBr_{12}(CF_2)_7CF_3$-11 | 18.09 | 1.90 |
| $DBr_4(CF_2)_5CF_3$-12 | 22.30 | 2.20 |
| $DBr_8(CF_2)_5CF_3$-12 | 21.42 | 2.11 |
| $DBr_{12}(CF_2)_5CF_3$-12 | 20.60 | 2.03 |
| $DBr_4(CF_2)_7CF_3$-12 | 24.31 | 1.92 |
| $DBr_8(CF_2)_7CF_3$-12 | 23.47 | 1.85 |
| $DBr_{12}(CF_2)_7CF_3$-12 | 22.68 | 1.79 |
| $DBr_4(CF_2)_5CF_3$-13 | 24.14 | 2.12 |
| $DBr_8(CF_2)_5CF_3$-13 | 23.45 | 2.06 |
| $DBn_2(CF_2)_5CF_3$-13 | 22.79 | 2.00 |
| $DBr_4(CF_2)_7CF_3$-13 | 26.04 | 1.83 |
| $DBr_8(CF_2)_7CF_3$-13 | 25.39 | 1.78 |
| $DBr_{12}(CF_2)_7CF_3$-13 | 24.77 | 1.74 |
| $(CF_2)_5CF_3$ | 28.93 | 1.90 |
| $(CF_2)_7CF_3$ | 30.38 | 1.60 |

**2. Evaluation result**

From FIG. 2, by controlling the fluorine atom content of the compound, it is possible to control the degree of hydrophilicity while controlling the ion exchange capacity (IEC) in a wide range.

Although exemplary embodiments of the disclosure have been described above in relation to the above-mentioned preferred examples, various modifications and variations can be made without departing from the spirit and scope of the disclosure. Therefore, the appended claims contain such modifications or variations as fall within the true spirit of the disclosure.

## Claims

1. An ionomer comprising a compound represented by Formula 1 below:

[Formula 1]

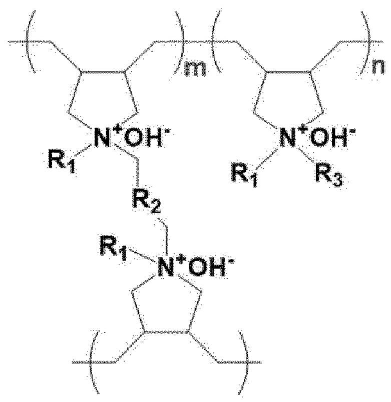

wherein the m is an integer from 0 to 100,
the n is an integer equal to 100-m,
the $R_1$ and the $R_3$ are each independently $-(CH_2)_xCH_3$, $-(CH_2)_x(CF_2)_yCF_3$, or

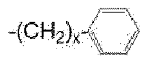

(where x and y are each independently an integer greater than or equal to 0),
the $R_2$ is $-(CH_2)_x$, $-(CF_2)_x$,

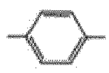 or 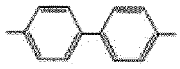

(where x is an integer greater than or equal to 0).

2. The ionomer of claim 1, wherein a molecular weight of a repeating unit of the compound is 150 to 667.

3. The ionomer of claim 1 or 2, wherein a fluorine atom content of the compound is 0 to 67 F%.

4. The ionomer of one of claims 1 to 3, wherein a ratio of the m and the n (m / n) is 0 to 1.

5. The ionomer of one of claims 1, to 4 wherein the x is an integer from 0 to 20.

6. A membrane electrode assembly comprising:

a cathode electrode;
an anode electrode positioned opposite to the cathode electrode; and

an electrolyte membrane positioned between the cathode electrode and the anode electrode, wherein at least one of the cathode electrode, the anode electrode, and the electrolyte membrane comprises the ionomer of claim 1.

**7.** A water electrolysis device comprising the membrane electrode assembly of claim 6.

**8.** A fuel cell comprising the membrane electrode assembly of claim 6.

**9.** A method for preparing the ionomer of claim 1, the method comprising the steps of:

modifying N,N-diallylamine to obtain N,N-diallylalkylamine;
polymerizing the N,N-diallylalkylamine to obtain 3,4-dimethyl-N-alkyl-pyrrole monomer represented by Formula 2 below; and
performing quaternization and crosslinking of the 3,4-dimethyl-N-alkyl-pyrrole monomer to obtain a compound represented by Formula 1:

[Formula 1]

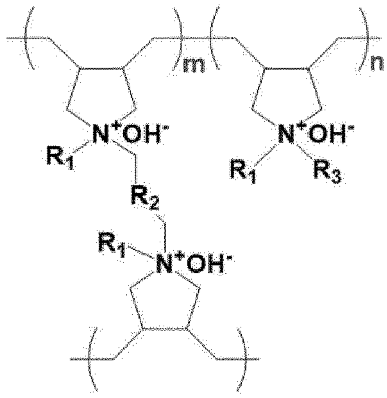

wherein the m is an integer from 0 to 100,
the n is an integer equal to 100-m,
the $R_1$ and the $R_3$ are each independently $-(CH_2)_xCH_3$, $-(CH_2)_x(CF_2)_yCF_3$, or

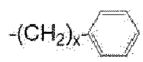

(where x and y are each independently an integer greater than or equal to 0),
the $R_2$ is $-(CH_2)_x$, $-(CF_2)_x$,

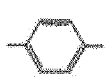 or 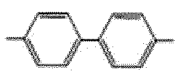

(where x is an integer greater than or equal to 0);

[Formula 2]

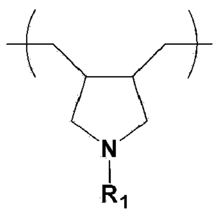

wherein the $R_1$ is $-(CH_2)_xCH_3$, $-(CH_2)_x(CF_2)_yCF_3$ or

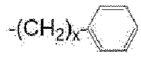

(where x and y are each independently an integer greater than or equal to 0).

FIG. 1

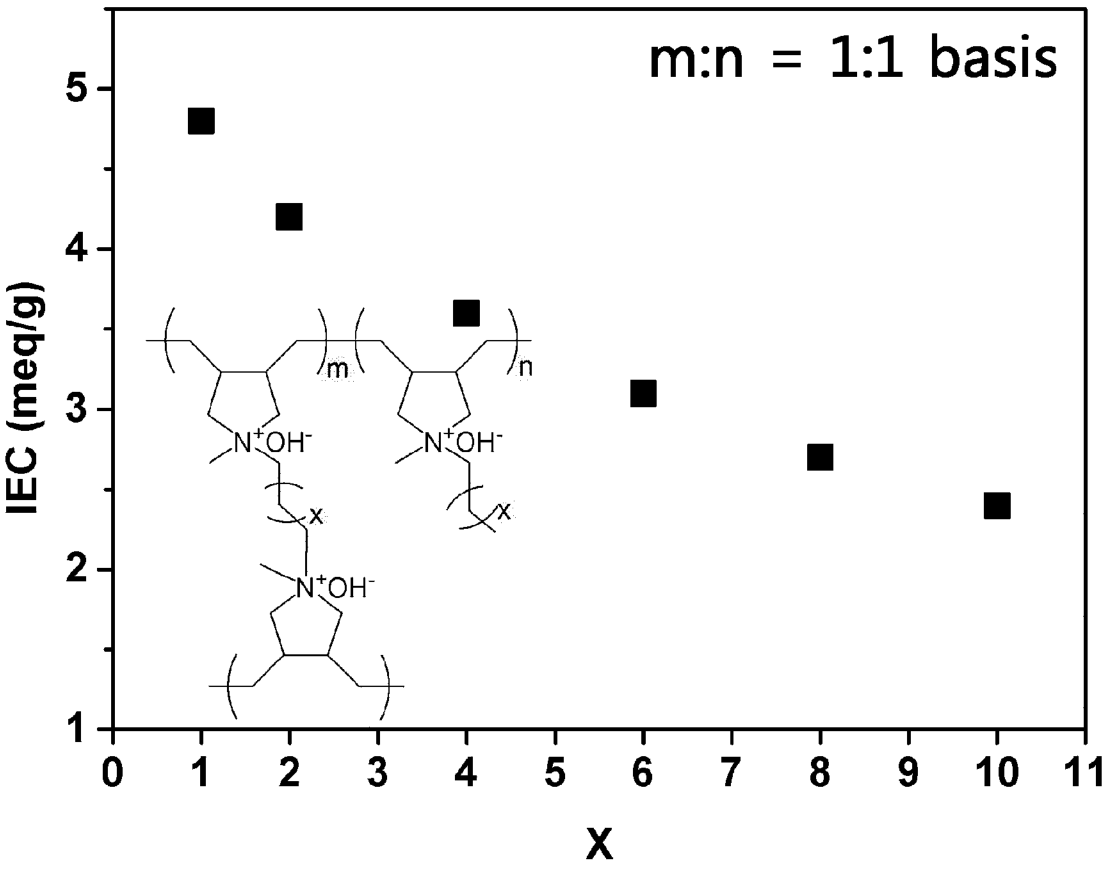

FIG. 2

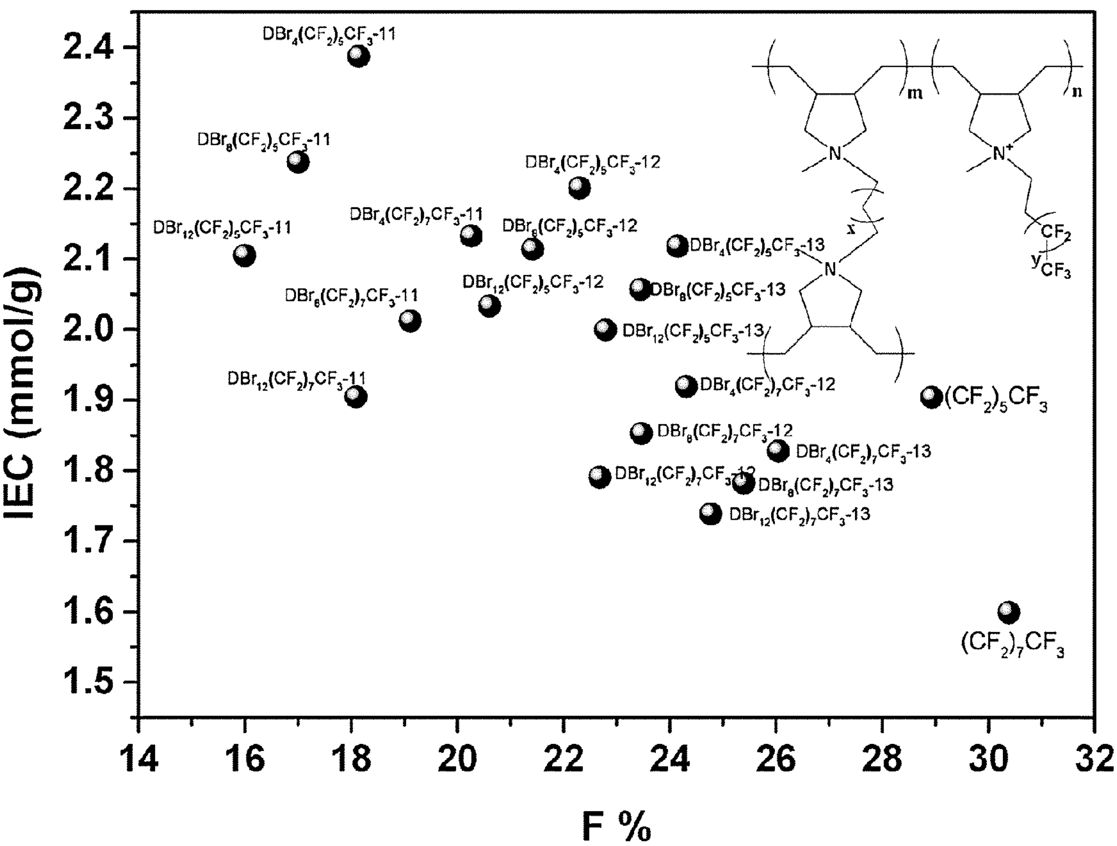
IEC (mmol/g)
F %
2.4
2.3
2.2
2.1
2.0
1.9
1.8
1.7
1.6
1.5
14
16
18
20
22
24
26
28
30
32
$DBr_4(CF_2)_5CF_3$-11
$DBr_8(CF_2)_5CF_3$-11
$DBr_{12}(CF_2)_5CF_3$-11
$DBr_4(CF_2)_7CF_3$-11
$DBr_8(CF_2)_7CF_3$-11
$DBr_{12}(CF_2)_7CF_3$-11
$DBr_4(CF_2)_5CF_3$-12
$DBr_8(CF_2)_5CF_3$-12
$DBr_{12}(CF_2)_5CF_3$-12
$DBr_4(CF_2)_5CF_3$-13
$DBr_8(CF_2)_5CF_3$-13
$DBr_{12}(CF_2)_5CF_3$-13
$DBr_4(CF_2)_7CF_3$-12
$DBr_8(CF_2)_7CF_3$-12
$DBr_{12}(CF_2)_7CF_3$-12
$DBr_4(CF_2)_7CF_3$-13
$DBr_8(CF_2)_7CF_3$-13
$DBr_{12}(CF_2)_7CF_3$-13
$(CF_2)_5CF_3$
$(CF_2)_7CF_3$

Europäisches Patentamt
European Patent Office
Office européen des brevets

# EUROPEAN SEARCH REPORT

Application Number
EP 23 21 1124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/199755 A1 (BROTHERSTON IAN DAVID [GB] ET AL) 21 August 2008 (2008-08-21)<br>* paragraph [0061]; claim all; examples 1-5 *<br>----- | 1-9 | INV.<br>H01M8/1023<br>H01M8/1004<br>C25B13/08 |
| X | WO 2010/055889 A1 (TOKUYAMA CORP [JP]; DAIKOKU YUSUKE [JP] ET AL.)<br>20 May 2010 (2010-05-20)<br>* claim all *<br>----- | 1-9 | |
| X | JACKSON M B ET AL: "EFFECT OF ION-EXCHANGE RESIN STRUCTURE ON NITRATE SELECTIVITY",<br>REACTIVE POLYMERS, ELSEVIER SCIENCE PUBLISHERS, AMSTERDAM, NL,<br>vol. 12, no. 3, 1 June 1990 (1990-06-01), pages 277-290, XP000138320,<br>ISSN: 0923-1137, DOI: 10.1016/0923-1137(90)90078-I | 1-5,9 | |
| A | * page 280 *<br>----- | 6-8 | TECHNICAL FIELDS SEARCHED (IPC) |
| A | CN 103 408 443 B (CHINA NAT OFFSHORE OIL CORP; CNOOC RES INST; UNIV SHANDONG)<br>15 October 2014 (2014-10-15)<br>* the whole document *<br>----- | 1-9 | H01M<br>C25B |

The present search report has been drawn up for all claims

1

| Place of search | Date of completion of the search | Examiner |
|---|---|---|
| Munich | 5 April 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 1124

This annex lists the patent family members relating to the patent documents cited in the above-mentioned European search report. The members are as contained in the European Patent Office EDP file on
The European Patent Office is in no way liable for these particulars which are merely given for the purpose of information.

05-04-2024

| Patent document cited in search report | Publication date | Patent family member(s) | Publication date |
|---|---|---|---|
| US 2008199755 A1 | 21-08-2008 | NONE | |
| WO 2010055889 A1 | 20-05-2010 | EP 2351785 A1 | 03-08-2011 |
| | | JP WO2010055889 A1 | 12-04-2012 |
| | | KR 20110101131 A | 15-09-2011 |
| | | TW 201030066 A | 16-08-2010 |
| | | US 2011281197 A1 | 17-11-2011 |
| | | WO 2010055889 A1 | 20-05-2010 |
| CN 103408443 B | 15-10-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 100908780